(19) Europäisches Patentamt
European Patent Office
Office européen des brevets

(11) Numéro de publication: **0 264 336 B1**

(12) **FASCICULE DE BREVET EUROPEEN**

(45) Date de publication de fascicule du brevet: **23.10.91**

(51) Int. Cl.$^5$: **C08L 83/04**

(21) Numéro de dépôt: **87420233.6**

(22) Date de dépôt: **03.09.87**

Le dossier contient des informations techniques présentées postérieurement au dépôt de la demande et ne figurant pas dans le présent fascicule.

(54) **Composition organopolysiloxane comportant un accelerateur de durcissement.**

(30) Priorité: **11.09.86 FR 8612893**

(43) Date de publication de la demande: **20.04.88 Bulletin 88/16**

(45) Mention de la délivrance du brevet: **23.10.91 Bulletin 91/43**

(84) Etats contractants désignés: **AT BE CH DE ES FR GB GR IT LI LU NL SE**

(56) Documents cités:
**EP-A- 21 859**
**EP-A- 0 118 325**
**EP-A- 0 140 770**
**GB-A- 2 041 955**
**US-A- 3 061 575**
**US-A- 4 304 897**

(73) Titulaire: **RHONE-POULENC CHIMIE**
**25, quai Paul Doumer**
**F-92408 Courbevoie Cédex(FR)**

(72) Inventeur: **Letoffe, Michel**
**5, Avenue de Limburg**
**F-69110 Saint-Foy-les-Lyon(FR)**
Inventeur: **Barrandon, Georges**
**Le Champ Cidex D 44**
**F-69440 Mornant(FR)**

(74) Mandataire: **Seugnet, Jean Louis et al**
**RHONE-POULENC INTERSERVICES Service Brevets Chimie Centre de Recherches des Carrières B.P. 62**
**F-69192 Saint-Fons Cédex(FR)**

**EP 0 264 336 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention a pour objet une composition organopolysiloxane durcissant en élastomère même en atmosphère confinée portant des radicaux acyloxy liés à des atomes de silicium et renfermant un accélérateur de durcissement ajouté avant emploi, choisi parmi CaO, SrO et BaO.

Les compositions, du type ci-dessus à durcissement accéléré, sont connues, elles sont décrites dans le brevet français FR-A-1 193 271 où l'accélérateur est l'oxyde de zinc, dans le brevet britannique GB-A-1 308 985 où l'accélérateur est une zéolithe, et dans les brevets européens EP-A-118 325 et EP-A-117 772 où l'accélérateur est respectivement choisi parmi un hydroxyde alcalin et alcalino-terreux ou bien par un mélange constitué par de l'eau et un phosphate et/ou un polyphosphate alcalin ou alcaline-terreux.

Ces compositions, à durcissement accéléré, à l'opposé des compositions monocomposantes à radicaux acyloxy sans accélérateur (décrites par exemple dans les brevets français FR-A-1 198 749, FR-A-1 220 348, FR-A-2 429 811 et le brevet européen EP-A-102 268), ne sont généralement pas stables au stockage mais leur durée de réticulation est beaucoup plus courte, par exemple de l'ordre de quelques minutes à 60 minutes.

Les compositions à durcissement accéléré, ce durcissement (ou cette réticulation) étant indépendant du taux d'humidité de l'atmosphère environnante, sont utilisées dans des domaines d'application où cette propriété est particulièrement intéressante comme par exemple la fabrication de joints "in-situ" dans l'industrie automobile.

Par ailleurs, dans les compositions monocomposantes portant des radicaux acyloxy, il est connu par le brevet américain US-A-3 061 575 d'ajouter au moins 1,5 mole de MgO par mole d'organotriacyloxysilane pour améliorer la stabilité thermique de l'élastomère réticulé surtout si ce dernier se trouve en atmosphère confinée.

Pour les applications industrielles impliquant le dépôt en continu de joints, on utilise généralement un appareil automatique de dépose de composition diorganopolysiloxane bi-composoante possèdant une tête mélangeuse équipée d'une buse de dépose, celle-ci se déplaçant selon le profil des joints à fabriquer.

Pour éviter les prises en masse de la composition dans la tête mélangeuse maintenue à température ambiante, lors de son fonctionnement ou lors des arrêts sur une chaîne continue de dépose de joints, il serait souhaitable de disposer d'une composition à durcissement accéléré présentant d'une part une réticulation à température ambiante très lente (supérieure à au moins une dizaine de minutes) après mélange des deux composantes c'est-à-dire après mélange de l'accélérateur de durcissement et, d'autre part, une réticulation très rapide du joint après sa dépose.

Il serait par ailleurs souhaitable de disposer d'une composition dont les temps de réticulation à température ambiante et sous l'effet de la chaleur puissent être diminués ou augmentés à la demande en pouvant jouer sur d'autres paramètres que la seule température.

La maîtrise du temps de réticulation à température ambiante permettrait d'arrêter une ligne continue de dépose de joints sans qu'il soit nécessaire de purger la tête mélangeuse. Une prise assez lente à température ambiante serait également favorable à l'obtention d'une adhérence convenable du joint sur les substrats car la composition s'étalerait facilement sur ces substrats avec un temps de contact suffisamment long pour assurer un mouillage convenable de la surface, car l'adhérence des joints sur les substrats est souvent une propriété essentielle du joint.

Il est également souhaitable de disposer d'une composition dont la prise est rapide sous l'effet d'une élévation de température la plus basse possible. En effet, une élévation modérée de la température permettrait de maintenir des cadences élevées sur les chaînes industrielles de dépose en continu de joints.

Une telle composition devrait présenter en outre, au niveau de l'élastomère obtenu, de bonnes propriétés mécaniques en particulier à chaud en atmosphère confinée au niveau de la déformation rémanente à la compression (DRC).

Les compositions connues à durcissement accélérées ne présentent pas l'ensemble des propriétés souhaitées citées ci-dessus. En effet les compositions accélérées à l'oxyde de zinc et aux zéolithes ne présentent pas notemment des propriétés mécaniques satisfaisantes à chaud en atmosphèrie confinée.

Les compositions décrites dans les brevets européens EP-A-118 325 et EP-A-117 772 ont permis de faire un progrès très important au niveau de la conservation des propriétés mécaniques à chaud en atmosphère confinée et ont donné la possibilité d'utiliser des compositions pour le collage ou le jointement de pièces circulant sur des chaînes industrielles de montage ou pour lesquelles il n'existe pas d'aires de stockage disponibles qui assureraient leur durcissement complet. Toutefois ces compositions peuvent présenter un temps de prise à température ambiante trop court et une adhérence sur substrat, en particulier métallique, qui peut être insuffisante.

La présente invention a précisément pour but de proposer des compositions organopolysiloxane à

durcissement accéléré qui présentent l'ensemble des propriétés souhaitées citées ci-dessus.

Elle concerne en effet une composition organopolysiloxane durcissant en élastomère, caractérisée en ce qu'elle comporte :

A. - 100 parties de polymères principalement $\alpha$ - $\omega$ di(hydroxy)diorganopolysiloxane, de viscosité 700 à 1 000 000 mPa.s à 25 °C, constitués chacun d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, de groupes cyano.

B -2 à 20 parties d'agents réticulants de formule générale :

$R_pSi(OCOR')_{4-p}$

dans laquelle le symbole R a la signification donnée sous (A), le symbole R', représente un radical hydrocarboné exempt d'insaturation aliphatique, ayant de 1 à 15 atomes de carbone et le symbole p représente zéro ou un.

C - 0 à 150 parties de charges minérales.

D - 0,1 à 15 parties, pour 100 parties de A + B + C d'au moins un accélérateur de durcissement choisi parmi l'oxyde de calcium, l'oxyde de strontium et l'oxyde de baryium.

Les polymères (A) de viscosité 700 à 1 000 000 mPa.s à 25 °C, de préférence 1 000 à 700 000 mPa.s à 25 °C, sont des polymères essentiellement linéaires, constitués de motifs diorganosiloxy de formule précitée $R_2SiO$, et bloqués à chaque extrémité de leur chaîne par un groupe hydroxyle ; toutefois la présence de motifs monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 8 atomes de carbone, substitués ou non par des atomes d'halogènes ou des groupes cyano, et représentés par les symboles R, peuvent être choisis parmi :

- les radicaux alkyles et halogénoalkyles ayant de 1 à 8 atomes de carbone tels que les radicaux méthyle, éthyle, n-propyle, isopropyle, n-butyle, n-pentyle, n-hexyle, éthyl-2 hexyle, n-octyle, trifluoro-3,3,3 propyle, trifluoro-4,4,4 butyle, pentafluoro-4,4,4,3,3 butyle,
- les radicaux cycloalkyles et halogénocycloalkyles ayant de 4 à 8 atomes de carbone tels que les radicaux cyclopentyle, cyclohexyle, méthylcyclohexyl difluoro-2,3 cyclobutyle, difluoro-3,4 méthyl-5 cycloheptyle,
- les radicaux alcényles ayant de 2 à 4 atomes de carbone tels que les radicaux vinyle, allyle, butène-2 yle,
- les radicaux aryles et halogénoaryles ayant de 6 à 8 atomes de carbone tels que les radicaux phényle, tolyle, xylyle, chlorophényle, dichlorophényle, trichlorophényle,
- les radicaux cyanoalkyles dont les chaînons alkyles ont de 2 à 3 atomes de carbone tels que les radicaux $\beta$-cyanoéthyle et $\gamma$-cyanopropyle.

A titre d'exemple de motifs représentés par la formule $R_2SiO$ on peut citer ceux de formules :

$(CH_3)_2SiO$
$CH_3(CH_2 = CH)SiO$ $CH_3(C_6H_5)SiO$
$(C_6H_5)_2SiO$
$CF_3CH_2CH_2(CH_3)SiO$
$NC\text{-}CH_2CH_2(CH_3)SiO$
$NC\text{-}CH(CH_3)CH_2(CH_2 = CH)SiO$
$NC\text{-}CH_2CH_2CH_2(C_6H_5)SiO$

Il doit être compris, selon une variante de l'invention, que l'on peut utiliser comme polymères (A) des copolymères ou un mélange constitué de polymères $\alpha$ - $\omega$ di(hydroxy)diorganopolysiloxanes qui diffèrent entre eux par le poids moléculaire et/ou la nature des groupements liés aux atomes de silicium.

Ces copolymères $\alpha$ - $\omega$ di(hydroxy)diorganopolysiloxanes (A) sont commercialisés ; en outre, ils peuvent être aisément fabriqués.

Les agents réticulants (B) sont employés à raison de 2 à 20 parties de préférence de 3 à 15 parties, pour 100 parties des polymères - di(hydroxy)diorganopolysiloxanes (A).

Ils répondent à la formule précitée.

$R_pSi(OCOR')_{4-p}$

dans laquelle, comme déjà indiqué, le symbole R a la signification donnée sous (A), le symbole R'

représente un radical hydrocarboné exempt d'insaturation aliphatique ayant de 1 a 15 atomes de carbone et le symbole p représente zéro ou 1.

Des précisions ont été déjà fournies sur la nature des radicaux représentés par le symbole R. Quant au symbole R' il représente un radical choisi dans le groupe constitué :

- des radicaux alkyles ayant de 1 à 15 atomes de carbone tels que les radicaux méthyle, éthyle, n-propyle, n-butyle, n-pentyle, éthyl-1 pentyle, n-hexyle, éthyl-2 hexyle, n-octyle, néodécyle, n-décyle, n-dodécyle, n-pentadécyle,
- des radicaux cycloalkyles ayant de 5 à 6 atomes de carbone nucléaire tels que les radicaux cyclopentyle et cyclohexyle,
- des radicaux aryles ayant de 6 à 8 atomes de carbone tels que les radicaux phényle, tolyle, xylyle.

A titre d'exemples d'agents réticulants (B), peuvent être cités ceux répondant aux formules suivantes :

$$CH_3Si(OCOCH_3)_3$$

$$C_2H_5Si-(OCOCH_3)_3$$

$$CH_2=CHSi(OCOCH_3)_3$$

$$C_6H_5Si-(OCOCH_3)_3$$

$$CH_3Si[OCOCH(C_2H_5)(CH_2)_3-CH_3]_3$$

$$CF_3CH_2CH_2Si(OCOC_6H_5)_3$$

$$CH_3Si(OCOC_6H_5)_3$$

$$CH_3Si(OCOCH_3)_2(OCO\underset{C_2H_5}{CH}-(CH_2)-_3CH_3)$$

$$CH_3COOSi[OCO\underset{C_2H_5}{CH}-(CH_2)_3CH_3]_3$$

Il est clair que l'on peut remplacer dans les compositions de l'invention les constituants A et B par les produits dévolatilisés équivalents provenant de la réaction stoechimétrique de A sur B conformément au procédé décrit dans le brevet français FR-A-1 220 348.

Les charges minérales (C) sont utilisées à raison de 0 à 150 parties, de préférence 5 à 120 parties, pour 100 parties des polymères $\alpha$ - $\omega$ di(hydroxy)diorganopolysiloxanes (A). Ces charges peuvent se présenter sous la forme de produits très finement divisés dont le diamètre particulaire moyen est inférieur à 0,1 $\mu$m. Parmi ces charges figurent les silices de combustion et les silices de précipitation ; leur surface spécifique est généralement supérieure à 40 m2/g, et se situe le plus souvent dans l'intervalle 150 - 200 m2/g.

Ces charges peuvent également se présenter sous la forme de produits plus grossièrement divisés, de diamètre particulaire moyen supérieur à 0,1 $\mu$m. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum ; leur surface spécifique est généralement inférieure à 30 m2/g.

Des charges (C) peuvent avoir été modifiées en surface, par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques.

Les charges (C) peuvent être constituées d'un mélange de plusieurs types de charges de granulométrie différente ; ainsi par exemple, elles peuvent être constituées de 30 à 70 % de silices finement divisées de surface spécifique supérieure à 40 m2/g et de 70 à 30 % de silices plus grossièrement divisées de surface spécifique inférieure à 30 m2/g.

Les compositions organopolysiloxanes conformes à l'invention, peuvent comporter, en dehors des constituants A, B, C, D, des catalyseurs de durcissement habituellement choisis dans le groupe constitué par :

- des sels métalliques d'acides carboxyliques, de préférence des sels d'organoétains d'acides carboxyliques tels que le diacétate et le dilaurate de dibutylétain,
- des produits de réaction des sels d'organoétains d'acides carboxyliques avec les esters titaniques (brevet américain US-A-3 409 753),
- des chelates d'étain (brevet européen EP-A-147 323),
- des dérivés organiques du titane et du zirconium tels que les esters titaniques et zirconiques (brevet US-A-4 525 565).

Ces catalyseurs de durcissement sont utilisés habituellement à raison de 0,0004 à 6 parties, de préférence de 0,0008 à 5 parties pour 100 parties des polymères $\alpha$ - $\omega$ di(hydroxy)diorganopolysiloxanes (A).

Les compositions organopolysiloxanes peuvent comporter également des adjuvants et additifs usuels, comprenant en particulier des stabilisants thermiques. Ces derniers produits, qui, par leur présence, améliorent la résistance thermique des élastomères silicones, peuvent être choisis parmi les sels, oxydes et hydroxydes de terres rares (et plus spécialement parmi les oxydes et hydroxydes cériques) ou parmi les oxydes de titane et de fer obtenus, de préférence, par combustion.

Avantageusement les compositions selon l'invention contiennent de 0,1 à 15 parties, et de préférence de 0,15 à 12 parties, de stabilisants thermiques pour 100 parties de polymères $\alpha$ -$\omega$ di(hydroxy)-diorganopolysiloxanes (A).

Comme autres additifs peuvent être mentionnés des composés améliorant la résistance à la flamme ; ils sont choisis de préférence parmi les dérivés organiques du phosphore, les composés organiques halogénés, les dérivés organiques et minéraux de platine.

Outre les constituants principaux A, B, C, D et les additifs précités, des composés organopolysiloxanes particuliers peuvent être introduits dans le dessein d'agir sur les caractéristiques physiques des compositions conformes à l'invention et/ou sur les propriétés mécaniques des élastomères issus du durcissement de ces compositions.

Ces composés organopolysiloxanes sont bien connus ; ils comprennent plus spécialement :

(1f) - des polymères $\alpha$ - $\omega$ bis(triorganosiloxy)diorganopolysiloxanes et/ou $\alpha$ (hydroxy),$\omega$ -(triorganosiloxy)diorganopolysiloxanes, de viscosités d'au moins 10 mPa.s à 25° C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle, phényle, 60 % au moins de ces radicaux organiques étant des radicaux méthyle et 10 % au plus étant des radicaux vinyle.

La viscosité de ces polymères peut atteindre plusieurs dizaines de millions de mPa.s à 25° C ; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles $\alpha$ -$\omega$-bis(triméthylsiloxy)-diméthylpolysiloxanes de viscosité allant de 10 mPa.s à 1 000 mPa.s à 25° C. Ces polymères qui jouent le rôle de plastifiants peuvent être introduits à raison d'au plus 150 parties, de préférence de 5 à 120 parties, pour 100 parties des polymères $\alpha$ - $\omega$ -di(hydroxy)diorganopolysiloxanes (A).

(2f) - des polymères méthylpolysiloxanes ramifiés, liquides, ayant de 1,4 à 1,9 radical méthyle par atome de silicium constitués d'une combinaison de motifs de formules :

$(CH_3)_3SiO_{0,5}$
$(CH_3)_2SiO$ et
$CH_3SiO_{1,5}$

ils renferment de 0,1 à 8 % de groupes hydroxyles. Ils peuvent être obtenus par hydrolyse des chlorosilanes correspondants comme l'enseignent les brevets français FR-A-1 408 662 et FR-A-2 429 811. On utilise, de préférence, des polymères ramifiés dont les motifs sont répartis, selon les rapports suivants :

$(CH_3)_3SiO_{0,5}$ / $(CH_3)_2SiO$ = 0,01 à 0,15
et $CH_3SiO_{1,5}$ / $(CH_3)_2SiO$ = 0,1 à 1,5

Ces polymères peuvent être introduits à raison d'au plus 70 parties, de préférence de 3 à 50 parties, pour 100 parties des polymères $\alpha$ - $\omega$-di(hydroxy)diorganopolysiloxanes (A). Ils apportent les propriétés de thixotropie notamment avec les silices traitées.

(3f) - des huiles diorganopolysiloxanes bloquées par des groupes hydroxyle et/ou alcoxy inférieurs ayant de 1 à 4 atomes de carbone, de faible viscosité en général comprise dans l'intervalle 2 mPa.s à 40 000 mPa.s à 25° C (si ces huiles sont bloquées uniquement par des groupes hydroxyles leur viscosité est inférieure à 700 mPa.s à 25° C) ; les radicaux organiques liés aux atomes de silicium de ces huiles sont, comme précédemment, choisis parmi les radicaux méthyle, vinyle, phényle, 40 % au moins de ces radicaux étant des radicaux méthyle et 10 % au plus étant des radicaux vinyle.

Comme groupes alcoxy inférieurs bloqueurs de chaine peuvent être cités les groupes méthoxy, éthoxy, isopropoxy, n-propoxy, n-butoxy, isobutoxy, tertiobutoxy. Les taux en groupes hydroxyl et/ou alcoxy s'étalent généralement de 0,5 à 20 %. Ces huiles sont préparées selon des techniques usuelles décrites plus précisément dans les brevets français FR-A-938 292, FR-A-1 104 674, FR-A-1 116, 196, FR-A-1 278 281, FR-A-1 276 619. De préférence, on utilise des huiles $\alpha$ - $\omega$ dihydroxydiméthylpolysiloxanes de viscosité 10 à 300 mPa.s à 25° C, des huiles $\alpha$ - $\omega$-dihydroxyméthylphénylpolysiloxanes de viscosité 200 à 600 mPa.s à 25° C, et des huiles $\alpha$ - $\omega$-diméthoxy(ou diéthoxy)diméthylpolysiloxanes de viscosité 30 à 2 000 mPa.s à 25° C. Elles peuvent être introduites à raison d'au plus 50 parties, de préférence de 2 à 40 parties, pour 100 parties des polymères $\alpha$ - $\omega$-di(hydroxy)diorganopolysiloxanes (A). Ces huiles permettent de réduire la viscosité globale et sont considérés selon l'expression usuelle comme des "process aid" ainsi que les huiles (2f).

(4f) - des composés organosiliciques hydroxylés choisis parmi les composés répondant à la formule générale

$$Z'SiZ_2(OSiZ_2)_wOH,$$

qui sont solides à la température ambiante. Dans cette formule les symboles Z, identiques ou différents, représentent des radicaux méthyle, éthyle, n-propyle, vinyle, phényle ; le symbole Z'représente un radical hydroxyle ou Z et les symbole w représente zéro, 1 ou 2.

A titre d'exemples concrets de ces composés peuvent être cités : le diphénylsilane diol, le méthylphénylsilanediol, le diméthylphénylsilanol, le tétraméthyl-1,1,3,3 disiloxanediol, le diméthyl-1,3 diphényl-1,3 disiloxanediol, le tétraméthyl-1,1,5,5 diphényl-3,3 trisiloxanediol. Ils peuvent être introduits à raison d'au plus 30 parties, de préférence 0,5 à 20 parties, pour 100 parties des polymères $\alpha$-$\omega$-di(hydroxy)-diorganopolysiloxanes (A). Ils confèrent de s propriétés thixotropantes au milieu qui en général se gélifie légèrement sous leur action.

Les polymères $\alpha$-$\omega$-bis(triorganosiloxy)diorganopolysiloxanes et/ou $\alpha$-(hydroxy $\omega$-(triorganosiloxy)-diorganopolysiloxanes décrits sous (1f) peuven être remplacés, totalement ou partiellement, par des composés organiques inertes vis-à-vis des constituants A, B, C, D et miscibles au moins avec les polymères $\alpha$-$\omega$-di(hydroxy)diorganopolysiloxanes (A). Comme examples de ces composés organiques peuvent être mentionnés les polyalkylbenzènes obtenus par alkylation du benzène à l'aide d'oléfines à longue chaîne, en particulier des oléfines à 12 atomes de carbone issues de la polymérisation du propylène. Des composés organiques de ce type figurent par exemple dans les brevets français FR-A-2 392 476 et FR-A-2 446 849 cités comme référence.

Les compositions selon l'invention peuvent être éventuellement utilisées après dilution dans des composés organiques liquides, les diluants sont de préférence des produits usuels commercialisés choisis parmi :

- les hydrocarbures aliphatiques, cycloaliphatiques, aromatiques, halogénés ou non, tels que le n-heptane, le n-octane, le cyclohexane, le méthylcyclohexane, le toluène, le xylène, le mésitylène, le cumène, la tétraline, le perchloroéthylène, le trichloroéthane, le tétrachloroéthane, le chlorobenzène, l'orthodichlorobenzène,
- les cétones aliphatiques et cycloaliphatiques tels que la méthyléthylcétone, la méthylisobutylcétone, la cyclohexanone, l'isophorone,

- les esters tels que l'acétate d'éthyle, l'acétate de butyle, l'acétate d'éthylglycol.

La quantité de diluant demeure en général peu importante, elle est en général inférieure à 50 %.

Les oxydes alcaline-terreux CaO, SrO et BaO sont utilisés à raison de 0,1 à 15 parties, de préférence de 1 à 10 parties pour 100 parties de la somme des constituants A, B, C. Ils sont utilisés sous forme de poudre dont la granulométrie moyenne est inférieure à 500 µm, de préférence inférieure à 150 µm et supérieure à 1 µm.

Jusqu'à 80 %, de préférence jusqu'à 50 % en poids de l'accélérateur C peuvent être remplacés par un hydroxyle alcalino-terreux choisi parmi $Ca(OH)_2$ ; $Mg(OH)_2$ ; $Sr(OH)_2$ et $Ba(OH)_2$.

Conformément à l'invention on a pu mettre en évidence que l'on peut améliorer fortement l'adhérence de l'élastomère sur divers supports en particulier le bois et l'aluminium en ajoutant pour 100 parties de la somme des constituants A, B, C, de préférence de 0,1 à 10, de préférence de 1 à 5 parties d'au moins un agent d'adhérence choisi parmi les produits de formule :

$Y_nSi(OY')_{4-n}$

dans laquelle Y est un radical hydrocarboné saturé ou insaturé en $C_1$-$C_{10}$ et Y' représente un radical alkyle en $C_1$-$C_8$ et un radical alcoxyalkylène en $C_3$-$C_6$, n est 1 ou 0 et les polysilicates d'alkyle en $C_1$-$C_4$, en particulier le polysilicate de méthyle et le polysilicate d'éthyle.

Les mélanges de ces agents d'adhérence sont également utilisables en particulier le mélange de silicate de méthyle et de polysilicate de méthyle.

Les agents d'adhérence E préférés sont :

| | |
|---|---|
| $CH_2 = CHSi(OCH_3)_3$ | vinyltriméthoxysilane |
| $CH_2 = CHSi(OCH_2CH_2OCH_3)_3$ | vinyltris(méthoxyéthoxy)silane |
| $Si(OCH_3)_4$ | silicate de méthyle |
| $Si(OCH_2CH_2OCH_3)_4$ | tétra(méthoxyéthoxy)silane le polysilicate de méthyle et le polysilicate d'éthyle. |

La préparation des compositions conforme à l'invention peut avoir lieu en une seule étape, par brassage dans un réacteur approprié de l'ensemble des constituants A, B, C, D et éventuellement des additifs et adjuvants précités. L'ordre d'introduction de ces composés, dans le réacteur peut être quelconque il est toutefois préférable d'ajouter les accélérateurs D après tous les autres composés de manière à éviter un durcissement prématuré de la masse.

La préparation des compositions peut également avoir lieu en 2 étapes. Selon cette technique qui constitue un objet de la présente invention des compositions monocomposantes sont tout d'abord préparées par mélange à l'abri de l'humidité des constituants A, B, C, éventuellement E et éventuellement des additifs et adjuvants usuels. Elles sont stables au stockage et durcissent seulement par exposition à l'air humide.

Dans une deuxième étape, on ajoute (et homogénéise) au moment de l'emploi, à ces compcsitions monocomposantes, les accélérateurs de durcissement D.

Ces compositions sont stables à température ambiante (25 °C) pendant au moins 10 minutes à l'abri de l'humidité de l'air. Ces compositions durcissent par contre très rapidement, c'est-à-dire en moins de 3 minutes environ, par chauffage à une température comprise entre 50 et 200 °C, de préférence entre 80 et 150 °C et/ou par incorporation dès la température ambiante, au sein du mélange, d'un agent dopant F de l'accélérateur D choisi parmi l'eau ou un acide organique carboxylique libre liquide, dont la chaîne hydrocarbonée est de préférence identique à celle du radical acyloxy R'OCO, de l'agent réticulant B, par exemple l'acide acétique, l'acide éthyl-2 hexanoïque.

L'eau ou l'acide doit être injecté en une quantité représentant au moins 0,1 partie pour une partie de l'accélérateur D. En dessous de 0,1 partie l'effet du dopant F est insuffisant.

La limite supérieure de la quantité de dopant F n'est pas étroitement déterminée, néanmoins il est inutile de dépasser 3 parties du poids de l'accélérateur D car l'excès de dopant en accélérant trop brutalement le durcissement des compositions pourrait avoir des répercutions néfastes sur les propriétés mécaniques des élastomères obtenus. Par ailleurs de telles compositions durcissant trop vite seraient presque impossible à mettre en oeuvre.

Bien entendu le dopant F peut être introduit sous forme d'un précurseur qui par exemple par réaction sur certains constituants de la composition, produit de l'eau et/ou de l'acide. Les composés (4f) ci-dessus hydroxylés constituent par exemple de tels précurseurs par réaction sur un excès d'agent réticulant B.

Un autre objet de la présente invention est constitué par l'utilisation des compositions à durcissement rapide pour l'obtention de joints.

Les compositions conformes à l'invention peuvent être employées pour de multiples applications

comme je jointoiement dans l'industrie du bâtiment, l'assemblage des matériaux les plus divers (métaux, matières plastiques, caoutchoucs naturels et synthétiques, bois, cartons, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

En outre, elles conviennent plus spécialement pour la formation de joints "in-situ" utilisés dans l'industrie automobile. Ces joints "in-situ" englobent plusieurs types, à savoir les joints "écrasés", les joints "en forme" et les joints "injectés".

Les joints "écrasés" sont formés à la suite de l'application d'un cordon pâteux des compositions sur la zone de contact entre 2 éléments métalliques à assembler. Le cordon pâteux est d'abord déposé sur l'un des éléments puis l'autre élément est aussitôt appliqué sur le premier ; il en résulte un écrasement du cordon avant qu'il ne se transforme en élastomère. Ce type de joints s'adresse à des assemblages ne devant pas être couramment démontés (joints de carter d'huile, joints de carter de distribution...).

Les joints "en forme" sont également obtenus à la suite de l'application d'un cordon pâteux des compositions sur la zone de contact entre 2 éléments à assembler. Toutefois, après la dépose du cordon pâteux sur l'un des éléments on attend le durcissement complet du cordon en élastomère et à ce moment-là seulement applique le deuxième élément sur le premier. Il en résulte qu'un tel assemblage est aisément démontable puisque l'élément qui est appliqué sur celui ayant reçu le joint, n'adhère pas à ce joint. Par ailleurs le joint, par son caractère caoutchouteux, épouse toutes les irrégularités des surfaces à jointoyer de ce fait, il est inutile (1) d'usiner soigneusement les surfaces métalliques devant être mises en contact les unes avec les autres et (2) de serrer avec force les assemblages obtenus ; ces particularités permettent de supprimer dans une certaine mesure, des joints de fixation, des entretoises, des nervures destinés habituellement à raidir et renforcer les éléments des assemblages.

Comme les compositions conformes à l'invention durcissent rapidement par chauffage et/ou par ajout du dopant F, en milieu confiné, ou à l'air ambiant il en résulte que les joints "en forme" (et aussi les autres joints "in-situ") découlant du durcissement de ces compositions peuvent être fabriqués dans des conditions de fabrication industrielle très contraignantes. Ils peuvent, par exemple, être fabriqués sur les chaines de montage usuelles de l'industrie automobile munies d'un appareil automatique de dépose des compositions. Cet appareil automatique possède bien souvent une tête mélangeuse équipée d'un système de chauffage et d'une buse de dépose, celle-ci se déplaçant selon le profil des joints à fabriquer. La tête mélangeuse peut recevoir la composition polysiloxanique monocomposante et l'accélérateur, elle peut disposer également d'une troisième entrée permettant d'introduire le dopant F décrit ci-dessus.

Les compositions, fabriquées et distribuées au moyen de cet appareil doivent avoir une durée de durcissement bien ajustée pour d'une part éviter des prises en masse dans la tête mélangeuse et d'autre part obtenir une réticulation complète après la fin de la dépose du cordon pâteux sur les pièces à jointoyer. Ces joints "en forme" conviennent plus spécialement pour les joints de couvre-culbuteurs, de couvercles de boites à vitesses, d'entretoises de distribution et même de carters d'huile... Pour stopper la dépose de joint il suffit d'arrêter le chauffage de la tête mélangeuse et/ou l'arrivée de l'agent dopant puis on dispose d'au moins 10 minutes à température ambiante pour éventuellement purger la tête mélangeuse de la composition organopolysiloxane avant la prise en masse de cette dernière si l'arrêt de la chaîne est supérieur au temps de début de durcissement de la composition.

Les joints injectés sont formés en milieu confiné, dans des cavités souvent complètement closes ; les compositions placées dans ces cavités se transforment rapidement en élastomères dont les propriétés sont identiques à celles d'élastomères découlant du durcissement des compositions à l'air ambiant. Ces joints peuvent assurer par exemple l'étanchéité des paliers de vilbrequins.

Les compositions conformes à l'invention conviennent également pour la formation de joints à durcissement rapide dans d'autres domaines que l'automobile. Ainsi elles peuvent servir à coller et à jointoyer des armoires électriques en matière plastique, à produire des joints pour aspirateurs et pour fers à repasser à la vapeur.

Les élastomères issus du durcissement des compositions conformes à l'invention ont des propriétés mécaniques identiques à celles des élastomères issus des compositions monocomposantes connues donc formées par simple mélange des constituants A, B, C et éventuellement d'additifs usuels sans l'introduction des accélérateurs D. En particulier, les déformations rémanentes à la compression sont relativement faibles, de l'ordre par exemple de 8 à 35 % ; en outre, la réticulation complète, après chauffage et/ou ajout du dopant F, mesurée par la dureté Shore A est obtenue dès la fin des temps de réticulation précédemment mentionnés lesquels s'étendent généralement de quelques minutes à 60 minutes, parfois plus mais jamais au-delà de 3 heures. Dans le cas des compositions monocomposantes, la réticulation complète demande dans les conditions les plus favorables, au moins une dizaine d'heures. Par ailleurs, la simple introduction

d'eau dans les compositions monocomposantes, bien qu'elle accélère sensiblement le processus de durcissement ne permet pas de les réticuler correctement ; en général, la dureté Shore A définitive est de 15 à 40 % plus faible que celle obtenue avec l'accélérateur D.

L'invention est illustrée par les exemples ci-dessous.

Dans ce qui suit et ce qui précède, sauf mentions contraires, les pourcentages et parties sont en poids.

- EXEMPLE 1:

On prépare une composition durcissant dès la température ambiante en élastomère en présence d'humidité de l'air par mélange des constituants suivants :

- 178 g : huile $\alpha$ - $\omega$ dihydroxypolydiméthylsiloxane de viscosité 20 000 mPa.s à 25 °C,
- 534 g : huile $\alpha$ - $\omega$ dihydroxypolydiméthylsiloxane de viscosité 3 500 mPa.s à 25 °C,
- 93 g : silice de combustion de surface spécifique BET 300 $m^2/g$ traitée par l'octaméthylcyclotétrasiloxane,
- 170 g : quartz broyé de diamètre particulaire moyen de 5 $\mu$ m,
- 25 g : méthyltriacétoxysilane.

Cette composition est fluide et stable en milieu fermé anhydre. Toutefois si on ajoute 29 g de chaux vive broyée ventilée de granulométrie inférieure ou égale à 75 $\mu$m, à 1 000 g de cette composition, et qu'on la met dans des tubes fermés placés dans des enceintes thermostatées à différentes températures, on remarque que le temps au bout duquel la composition ne peut plus être extrudée varie de la façon suivante indiquée dans le tableau I ci-après.

TABLEAU I

| Température de l'enceinte thermostatée | Temps au bout duquel la composition n'est plus extrudable |
|---|---|
| 22 °C | 60 minutes |
| 25 °C | 40 minutes |
| 36,5 °C | 20 minutes |
| 45 °C | 12 minutes |
| 50 °C | 5 minutes |

On observe donc que l'augmentation de température provoque rapidement une diminution du temps de durcissement en milieu clos.

- EXEMPLE 2 :

Pour apprécier le temps au bout duquel une composition organopolysiloxane commence à durcir on introduit, à l'abri de l'humidité de l'air, la composition dans un plastographe BRABENDER R type PL3S muni d'un malaxeur à cames type N50H et d'un enregistreur de la valeur du couple résistant.

Cette composition est obtenue par mélange d'une composition $H_1$ obtenue par mélange de :

- 100 parties d'une huile $\alpha$ -$\omega$ di(hydroxy)polydiméthylsiloxane de viscosité 4 000 mPa.s à 25 °C,
- 20 parties d'une silice de combustion de surface spécifique BET 200 $m^2/g$,
- 20 parties de quartz broyé de diamètre particulaire moyen de 5 $\mu$ m,
- 20 parties d'oxyde de titane du type rutile de diamètre particulaire moyen 8 $\mu$ m,
- 1 partie d'une huile $\alpha$ - $\omega$ -di(hydroxy)méthylphénylpolysiloxane de viscosité 350 mPa.s à 25 °C,
- 6 parties de méthyl(triacétoxy)silane.

Cette composition $H_1$ se présente sous la forme d'une pâte non coulante dont la consistance n'évolue pas à l'abri de l'humidité. La température de la pâte est réglée grâce à la présence d'un bain thermostaté ; puis on met au zéro l'échelle mesurant le couple et on ajoute à 100 parties de composition $H_1$ 10 parties d'un additif de composition suivante :

- 67 parties de polymère $\alpha$ - $\omega$ -triméthylsiloxypolydiméthylsiloxane de viscosité 30 000 mPa.s,
- 28 parties de chaux vive broyée CaO ventilée de l'exemple 1 ou de $Ca(OH)_2$,
- 1 partie d'oxyde de fer,
- 4 parties de silice de combustion de surface BET 150 $m^2/g$.

On obtient ainsi la composition $H_2$ accélérée.

On mesure la température $\theta$ de la composition au moment de l'introduction de l'additif ainsi que le temps t au bout duquel on observe une montée brusque du couple moteur, c'est-à-dire le début de

durcissement de la composition.

Les résultats obtenus sont rassemblés dans le tableau II ci-après :

TABLEAU II

| | t | |
|---|---|---|
| | avec CaO | avec $Ca(OH)_2$ |
| 25 °C | 50 minutes | 8 minutes |
| 30 °C | 40 minutes | 7 minutes |
| 48 °C | 10 minutes | 1 minutes |
| 75 °C | 2 minutes | réticule |

Du tableau II il ressort que l'emploi de CaO conduit à 20 - 30 °C à des temps de rétioulation plus longs que $Ca(OH)_2$ et qu'une augmentation modérée de température permet de retrouver des temps de durcissement courts.

- <u>EXEMPLE 3</u> :

On reproduit le mode opératoire de l'exemple 2 sauf que l'on opère à 20 °C et que l'on ajoute à la composition $H_2$ accélérée à CaO des quantités déterminées d'acide acétique q données en parties pour une partie d'accélérateur (CaO) et on mesure le temps t (mn) au bout duquel on observe une montée brusque du couple. Les résultats sont rassemblés dans le tableau III ci-après :

**TABLEAU III**

| q | t |
|---|---|
| 0 | 85 |
| 0,3 | 35 |
| 1 | 5 |

Du tableau III, il apparaît que suivant les quantités q d'acide libre ajouté on peut règler la vitesse de prise à température ambiante.

- <u>EXEMPLE 4</u> :

On utilise la composition $H_2$ de l'exemple 2 accélérée à l'oxyde de calcium et on ajoute des quantités croissantes p de polysilicate de méthyle indiquées en parties en poids pour 100 parties de $H_2$ dans le tableau IV ci-après.

On réalise ensuite des éprouvettes sur lesquelles on mesure la résistance à la rupture (R/R en MPa) et l'allongement à la rupture en procédant suivant la norme ASA 116-1-1960 ; après durcissement à deux températures distinctes $\theta$ à 25 °C pendant 24 heures et à 60 °C pendant 30 minutes. Les résultats obtenus sur aluminium ordinaire abrasé dégraissé sont rassemblés dans le tableau IV ci-après :

TABLEAU IV

| P (en parties) | (°C) | R/R MPa | A/R % | Type de rupture |
|---|---|---|---|---|
| 0 | 25 °C | 0,30 | 30 | adhésive |
| 0,5 | 25 °C | 0,56 | 44 | adhésive |
| 0,5 | 60 °C | 0,60 | 44 | adhésive |
| 1 | 25 °C | 0,68 | 68 | adhésive |
| 1 | 60 °C | 0,90 | 60 | adhésive |
| 2 | 25 °C | 1,20 | 104 | cohésive |
| 2 | 60 °C | 1,10 | 90 | cohésive |

Du tableau IV, il apparaît que des quantités croissantes de polysilicate de méthyle permettent d'améliorer le niveau d'adhérence obtenu et que de faibles quantités de polysilicate de méthyle permettent d'obtenir un niveau d'adhérence satisfaisant sur aluminium.

- EXEMPLE 5 :

A 100 parties de la composition $H_1$ de l'exemple 1 on ajoute 10 parties des empâtages suivants contenant différents agents d'adhérence E :

- 56 parties de polymère $\alpha$ -$\omega$(triméthylsiloxy)polydiméthylsiloxane de viscosité 30 000 mPa.s à 25 °C,
- 28 parties d'oxyde de calcium en poudre de l'exemple 2,
- 5 parties de silice de combustion de surface spécifique BET 150 $m^2/g$,
- 1 partie d'oxyde de fer en poudre,
- 10 parties de E.

On apprécie selon la norme ASA 116-1-1960 l'adhérence des élastomères obtenus sur aluminium ordinaire dégraissé.

Les résultats obtenus sont rassemblés dans le tableau V ci-après :

TABLEAU V

| Agent d'adhérence | R/R MPa | A/R % | Type de rupture |
|---|---|---|---|
| néant | 0,30 | 30 | adhésive |
| $Si(OnC_3H_7)_4$ | 0,40 | 40 | adhésive |
| $CH_3Si(OCH_3)_3$ | 0,36 | 36 | adhésive |
| $CH_2=CHSi(OCH_3)_3$ | 0,62 | 50 | adhésive |
| $CH_2=CHSi(OCH_2CH_2OCH_3)_3$ | 0,45 | 48 | adhésive |
| $Si(OCH_3)_4$ | 1,25 | 90 | cohésive |
| $Si(OCH_2CH_2CH_2OCH_3)_4$ | 1,24 | 88 | cohésive |
| polysilicate de méthyle | 1,24 | 92 | cohésive |

- EXEMPLE 6 :

Composition $I_1$ stable au stockage en l'absence d'humidité obtenue par mélange de :

- 100 parties de polymère $\alpha$ - $\omega$ -dihydroxypolydiméthylsiloxane de viscosité 3 500 mPa.s à 25 °C,
- 10 parties de méthyltris(éthyl-2 hexanoyloxy)silane,
- 7 parties de silice de combustion de surface BET 150 $m^2m/g$

A 100 parties de composition $I_1$ on introduit dans le plastographe BRABENDER R de l'exemple 2, 10 parties de l'empâtage $I_2$ obtenu par mélange à l'abri de l'humidité de :

- 56 parties de polymère $\alpha$ - $\omega$ triméthylsiloxypolydiméthylsiloxane de viscosité 30 000 mPa.s à 25 °C,
- 28 parties d'oxyde de calcium de l'exemple 2,
- 1 partie d'oxyde de fer,
- 10 parties de silicate de méthyle $Si(OCH_3)_4$.

On obtient ainsi une composition $I_3$ sur laquelle on mesure la montée du couple résistant à 22 °C au bout de 15 minutes selon la méthode exposée à l'exemple 2.

Sur la composition $I_3$ on confectionne des éprouvettes pour apprécier l'adhérence selon la norme ASA-116-1-1960 sur acier et aluminium dégraissés.

Après durcissement pendant 30 minutes à 60 °C, on obtient les résultats suivants rassemblés dans le tableau VI ci-après :

TABLEAU VI

| Support | R/R MPa | A/R % |
|---|---|---|
| Acier | 0,46 | 65 |
| Aluminium | 0,40 | 59 |

La composition $I_1$ est ensuite utilisée seule ou avec 10 % de l'additif $I_2$ pour confectionner des cordons déposés sur plaque d'acier et des films de 2 mm d'épaisseur sur un support traité par un agent de démoulage (polymère fluoré) pour le rendre non-adhérent.

Les cordons de composition $I_1$ déposés sur la plaque d'acier présentent après 8 jours à température ordinaire une corrosion visible (aspect de la rouille) sur les bords du cordon en contact avec le métal ; par contre lorsqu'on a utilisé la composition $I_3$, il n'y a pas de corrosion apparente et l'adhérence est maintenue.

Les films de 2 mm d'épaisseur sont décollés après 7 jours et mis à gonfler dans du toluène. Un dosage de l'acide éthyl-2 hexanoïque libéré au cours de la réticulation de la composition $I_1$ montre que le toluène a extrait 38 mmoles d'acide pour 100 g d'élastomère. Lorsque l'élastomère a été préparé à partir de la composition $I_3$ le toluène ne contient plus d'acide dosable.

## Revendications

1. Composition organopolysiloxane durcissant en élastomère, caractérisée en ce qu'elle comporte :

   A. - 100 parties de polymères principalement α-ωdi(hydroxy)diorganopolysiloxane, de viscosité 700 à 1 000 000 mPa.s à 25 °C, constitués chacun d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, de groupes cyano.

   B. - 2 à 20 parties d'agents réticulants de formule générale :

   $$R_pSi(OCOR')_{4-P}$$

   dans laquelle le symbole R a la signification donnée sous (A), le symbole R'représente un radical hydrocarboné exempt d'insaturation aliphatique, ayant de 1 à 15 atomes de carbone et le symbole p représente zéro ou un.

   C. - 0 à 150 parties de charges minérales.

   D. - 0,1 à 15 parties, pour 100 parties de A + B + C d'au moins un accélérateur de durcissement choisi parmi l'oxyde de calcium, l'oxyde de strontium et l'oxyde de baryium.

2. Composition selon la revendication 1, caractérisée en ce que jusqu'à 80 % en poids de l'accélérateur D est remplacé par un hydroxyde alcaline-terreux choisi parmi $Ca(OH)_2$ ; $Mg(OH)_2$ ; $Sr(OH)_2$ et $Ba(OH)_2$.

3. Composition selon la revendication 1 ou 2 dans laquelle les radicaux R portés par les atomes de

silicium du diorganopolysiloxane A sont choisis parmi :
- les radicaux alcoyles et halogénoalcoyles ayant de 1 à 8 atomes de carbone,
- les radicaux cycloalcoyles et halogénocycloalcoyles ayant de 4 à 8 atomes de carbone,
- les radicaux alcényles ayant de 2 à 4 atomes de carbone,
- les radicaux aryles et halogénoaryles ayant de 6 à 8 atomes de carbone,
- les radicaux cyanoalcoyles dont les chaînons alcoykles ont de 2 à 3 atomes de carbone.

**4.** Composition selon l'une quelconque des revendications précédentes dans laquelle le polyacyloxysilane B a pour formule :
$R_pSi(OCOR')_{4-p}$ dans laquelle le symbole p représente 0 ou 1, le symbole R' représentant :
- des radicaux alkyles ayant de 1 à 15 atomes de carbone,
- des radicaux cycloalcoyles ayant de 5 à 6 atomes de carbone nucléaire,
- des radicaux aryles ayant de 6 à 8 atomes de carbone.

**5.** Composition selon l'une quelconque des revendications précédentes, caractérisée en ce que les constituants A et B sont remplacés par les produits dévolatilisés provenant de la réaction stoechiométrique de A sur B.

**6.** Composition selon l'une quelconque des revendications précédentes, caractérisée en ce qu'elle contient en outre un catalyseur de durcissement.

**7.** Composition selon l'une quelconque des revendications précédentes, caractérisée en ce qu'elle contient en outre pour 100 parties de la somme des constituants A, B, C de 0,1 à 10 parties d'au moins un agent d'adhérence E choisi parmi les produits de formule :

$Y_nSi(OY')_{4-n}$

dans laquelle Y est un radical hydrocarboné saturé ou insaturé en $C_1$-$C_{10}$ et Y' représente un radical alkyle en $C_1$-$C_8$ et un radical alcoxyalkylène en $C_3$-$C_6$, n est 1 ou 0 et les polysilicates d'alkyle en $C_1$-$C_4$.

**8.** Composition selon la revendication 7, caractérisée en ce que l'agent d'adhérence E est choisi parmi le silicate de méthyle, le tétra(méthoxyéthoxy)silane et le polysilicate de méthyle et leurs divers mélanges possibles.

**9.** Composition selon l'une quelconque des revendications précédentes, caractérisée en ce qu'elle comporte en outre un plastifiant dont tout ou partie sont des polyalkylbenzènes.

**10.** Procédé de durcissement d'une composition telle que définie à l'une quelconque des revendications précédentes, caractérisé en ce qu'après avoir ajouté l'accélérateur D aux autres constituants de la composition, on provoque le durcissement de la composition par chauffage et/ou dès la température ambiante, par incorporation, dans la composition d'un agent dopant F choisi parmi l'eau et un acide organique carboxylique liquide en une quantité représentant au moins 0,1 partie de F pour 1 partie de D.

**11.** Utilisation d'une composition telle que définie à l'une quelconque des revendications 1 à 9 pour la fabrication de joints.

## Claims

**1.** Organopolysiloxane composition curing to an elastomer, characterised in that it comprises:
A. - 100 parts of chiefly $\alpha,\omega$-di(hydroxy)diorganopolysiloxane polymers with a viscosity of 700 to 1,000,000 mPa s at 25°C, each consisting of a succession of diorganosiloxy units of formula $R_2SiO$ in which the symbols R, which are identical or different, denote hydrocarbon radicals containing from 1 to 8 carbon atoms, substituted or otherwise by halogen atoms or cyano groups.
B. - 2 to 20 parts of crosslinking agents of general formula:

$R_pSi(OCOR')_{4-p}$

in which the symbol R has the meaning given under (A), the symbol R' denotes a hydrocarbon radical free from aliphatic unsaturation, containing from 1 to 15 carbon atoms, and the symbol p denotes zero or one.

C. - 0 to 150 parts of inorganic fillers.

D. - 0.1 to 15 parts, per 100 parts of A + B + C, of at least one cure accelerator chosen from calcium oxide, strontium oxide and barium oxide.

2. Composition according to Claim 1, characterised in that up to 80% by weight of the accelerator D is replaced with an alkaline-earth metal hydroxide chosen from $Ca(OH)_2$, $Mg(OH)_2$, $Sr(OH)_2$ and $Ba(OH)_2$.

3. Composition according to Claim 1 or 2, in which the radicals R carried by the silicon atoms of the diorganopolysiloxane A are chosen from:
   - alkyl and haloalkyl radicals containing from 1 to 8 carbon atoms,
   - cycloalkyl and halocycloalkyl radicals containing from 4 to 8 carbon atoms,
   - alkenyl radicals containing from 2 to 4 carbon atoms,
   - aryl and haloaryl radicals containing from 6 to 8 carbon atoms, and
   - cyanoalkyl radicals in which the alkyl chain units contain from 2 to 3 carbon atoms.

4. Composition according to any one of the preceding claims, in which the polyacyloxysilane B has the formula:
   $R_pSi(OCOR')_{4-p}$ in which the symbol p denotes 0 or 1, the symbol R' denoting:
   - alkyl radicals containing from 1 to 15 carbon atoms,
   - cycloalkyl radicals containing from 5 to 6 nuclear carbon atoms, and
   - aryl radicals containing from 6 to 8 carbon atoms.

5. Composition according to any one of the preceding claims, characterised in that the constituents A and B are replaced with the devolatilised products originating from the stoichiometric reaction of A with B.

6. Composition according to any one of the preceding claims, characterised in that it additionally contains a cure catalyst.

7. Composition according to any one of the preceding claims, characterised in that it additionally contains, per 100 parts of the sum of the constituents A, B and C, from 0.1 to 10 parts of at least one adhesion promoter E chosen from the products of formula:

   $Y_nSi(OY')_{4-n}$

   in which Y is a $C_1$-$C_{10}$ saturated or unsaturated hydrocarbon radical and Y' denotes a $C_1$-$C_8$ alkyl radical and a $C_3$-$C_6$ alkoxyalkylene radical, n is 1 or 0 and $C_1$-$C_4$ alkyl polysilicates.

8. Composition according to Claim 7, characterised in that the adhesion promoter E is chosen from methyl silicate, tetra(methoxyethoxy)silane and methyl polysilicate and various possible mixtures thereof.

9. Composition according to any one of the preceding claims, characterised in that it additionally comprises a plasticiser, all or part of which is polyalkylbenzenes.

10. Process for curing a composition such as defined in any one of the preceding claims, characterised in that after having added the accelerator D to the other constituents of the composition, curing of the composition is caused by heating and/or from room temperature onwards, by incorporating into the composition a doping agent F chosen from water and a liquid carboxylic organic acid in a quantity representing at least 0.1 part of F per 1 part of D.

11. Use of a composition such as defined in any one of Claims 1 to 9 for the manufacture of seals.

**Patentansprüche**

1. Zu einem Elastomeren härtende Organopolysiloxanzusammensetzung, dadurch gekennzeichnet, daß sie enthält:
   A. - 100 Teile hauptsächlich α,ω-Di-(hydroxy)-diorgsnopolysiloxanpolymere mit einer Viskosität von 700 bis 1 000 000 mPa.s bei 25° C, jeweils bestehend aus einer Abfolge von Diorganosiloxygruppen der Formel $R_2SiO$, worin die Symbole R, die gleich oder verschieden sind, Kohlenwasserstoffreste mit 1 bis 8 Kohlenstoffatomen wiedergeben, die substituiert sind oder nicht durch Halogenatome oder Cyanogruppen,
   B. - 2 bis 20 Teile Vernetzungsmittel der allgemeinen Formel

   $R_pSi(OCOR')_{4-p}$

   worin das Symbol R die unter (A) angegebene Bedeutung besitzt, das Symbol R' einen Kohlenwasserstoffrest ohne aliphatische Unsättigung mit 1 bis 15 Kohlenstoffatomen bedeutet und das Symbol p für 0 oder 1 steht,
   C. - 0 bis 150 Teile mineralische Füllstoffe,
   D. - 0,1 bis 15 Teile je 100 Teile von A + B + C zumindest eines Härtungsbeschleunigers, ausgewählt unter Calciumoxid, Strontiumoxid und Bariumoxid.

2. Zusammensetzung gemäß Anspruch 1, dadurch gekennzeichnet, daß bis zu 80 Gew.% des Beschleunigers D durch ein Erdalkalihydroxid, ausgewählt unter $Ca(OH)_2$; $Mg(OH)_2$; $Sr(OH)_2$ und $Ba(OH)_2$, ersetzt werden.

3. Zusammensetzung gemäß Anspruch 1 oder 2, dadurch gekennzeichnet, daß die Reste R, welche von den Siliciumatomen des Diorganopolysiloxans A getragen werden, ausgewählt sind unter
   - den Alkyl- und Halogenalkylresten mit 1 bis 8 Kohlenstoffatomen,
   - den Cycloalkyl- und Halogencycloalkylresten mit 4 bis 8 Kohlenstoffatomen,
   - den Alkenylresten mit 2 bis 4 Kohlenstoffatomen,
   - den Aryl- und Halogenarylresten mit 6 bis 8 Kohlenstoffatomen,
   - den Cyanoalkylresten, deren Alkylketten 2 bis 3 Kohlenstoffatome aufweisen.

4. Zusammensetzung gemäß einem der vorhergehenden Ansprüche, worin das Polyacyloxysilan B die Formel $R_pSi(OCOR')_{4-p}$ besitzt, worin das Symbol p 0 oder 1 bedeutet, das Symbol R' bedeutet:
   - Alkylreste mit 1 bis 15 Kohlenstoffatomen,
   - Cycloalkylreste mit 5 bis 6 Kernkohlenstoffatomen,
   - Arylreste mit 6 bis 8 Kohlenstoffatomen.

5. Zusammensetzung gemäß einem der vorhergehenden Ansprüche, dadurch gekennzeichnet, daß die Bestandteile A und B durch verflüchtigte Produkte ersetzt sind, die der stöchiometrischen Umsetzung von A mit B entstammen.

6. Zusammensetzung gemäß einen der vorhergehenden Ansprüche, dadurch gekennzeichnet, daß sie außerdem einen Härtungskatlaysator enthält.

7. Zusammensetzung gemäß einem der vorhergehenden Ansprüche, dadurch gekennzeichnet, daß sie außerdem je 100 Teile der Summe der Bestandteile A, B, C 0,1 bis 10 Teile zumindest eines Haftmittels E enthält, ausgewählt unter den Produkten der Formel

   $Y_nSi(OY')_{4-n}$

   worin Y einen gesättigten oder ungesättigten $C_{1-10}$-Koh-lenwasserstoffrest bedeutet und Y' für einen $C_{1-8}$-Alkyl-rest und einen $C_{3-6}$-Alkoxyalkylenrest steht, n 1 oder 0 ist,und den $C_{1-4}$-Alkylpolysilicaten.

8. Zusammensetzung gemäß Anspruch 7, dadurch gekennzeichnet, daß das Haftmittel E unter dem Methylsilicat, dem Tetra-(methoxyethoxy)-silan und dem Methylpolysilicat und deren verschiedenen möglichen Gemischen ausgewählt ist.

9. Zusammensetzung gemäß einem der vorhergehenden Ansprüche, dadurch gekennzeichnet, daß sie außerdem ein Plastifizierungsmittel enthält, bei dem es sich vollständig oder teilweise um Polyalkylbenzole handelt.

**10.** Verfahren zur Härtung einer Zusammensetzung, wie in einem der vorhergehenden Ansprüche definiert, dadurch gekennzeichnet, daß man nach Zugabe des Beschleunigers D zu den weiteren Bestandteilen der Zusammensetzung die Härtung der Zusammensetzung durch Erhitzen und/oder ab Raumtemperatur durch Einbringen in die Zusammensetzung eines Dotierungsmittels F, ausgewählt unter Wasser und einer flüssigen, organischen Carbonsäure, in einer Menge von zumindest 0,1 Teil F je 1 Teil D herbeiführt.

**11.** Verwendung einer Zusammensetzung gemäß einem der Ansprüche 1 bis 9 für die Herstellung von Verbindungen.